# EUROPEAN PATENT SPECIFICATION

(11) **EP 3 906 662 B1**
(45) Date of publication and mention of the grant of the patent: **03.04.2024**
(21) Application number: 19907150.7
(22) Date of filing: 31.12.2019
(51) Int. Cl.: G06T 7/70, H04N 13/383, G01S 3/00, H04N 13/344, G06V 40/18, G06V 20/10, G02B 27/01, G06F 16/487, G02B 27/00, G06F 3/01

(54) **SYSTEM AND METHOD FOR PROVIDING INCREASED SENSOR FIELD OF VIEW**
SYSTEM UND VERFAHREN ZUR BEREITSTELLUNG EINES VERGRÖSSERTEN SICHTSENSORFELDES
SYSTÈME ET PROCÉDÉ DE FOURNITURE D'UN CHAMP DE VISION DE CAPTEUR ACCRU

(30) Priority: 31.12.2018 IL 26404618
(43) Date of publication of application: 10.11.2021
(73) Proprietor: Elbit Systems Ltd, 3100401 Haifa (IL)
(72) Inventor: OPHIR, Yoav, 3100401 Haifa (IL)
(74) Representative: Pearl Cohen Zedek Latzer Baratz UK LLP
(86) International application number: PCT/IL2019/051443
(87) International publication number: WO 2020/141523

(56) References cited:
- WO-A1-2017/130198
- US-A1- 2004 179 121
- US-A1- 2017 085 791
- US-A1- 2017 116 709
- US-A1- 2018 081 178
- US-B2- 9 343 043

## Description

### FIELD OF THE INVENTION

The present invention relates generally to the field of narrow field of view sensors displayed on a wide field of view display mechanism.

### BACKGROUND OF THE INVENTION

Prior to setting forth the background of the invention, it may be helpful to provide definitions of certain terms that will be used hereinafter.

The term "field of view" or "FOV" as used herein is defined as the extent of the observable world that is seen at any given moment. In the case of optical instruments or sensors it is a solid angle through which a detector is sensitive to electromagnetic radiation.

The term "head-mounted display" or "HMD" as used herein is defined as a display device, worn on the head or as part of a helmet, that has a small display optic in front of one (monocular HMD) or each eye (binocular HMD). An HMD has many uses, including in gaming, aviation, engineering, and medicine.

In Some cases, the field of view of the imaging sensor installed on the head mounted display is far narrower than the file of view of the head mounted display. The challenge to address therefore is how to compensate for the shortcoming of data from the sensor at the time that the actual field of view of the sensor does not match the field of view of the head mounted display.

The prior art of US 2018/081178 A1 discloses a foveated display system for an HMD. The prior art of US 2017/116709 A1 discloses a technique of generating panoramic images. Further prior art documents include the publications US 2004/179121 A1 and US 9 343 043 B2.

### BRIEF SUMMARY OF THE INVENTION

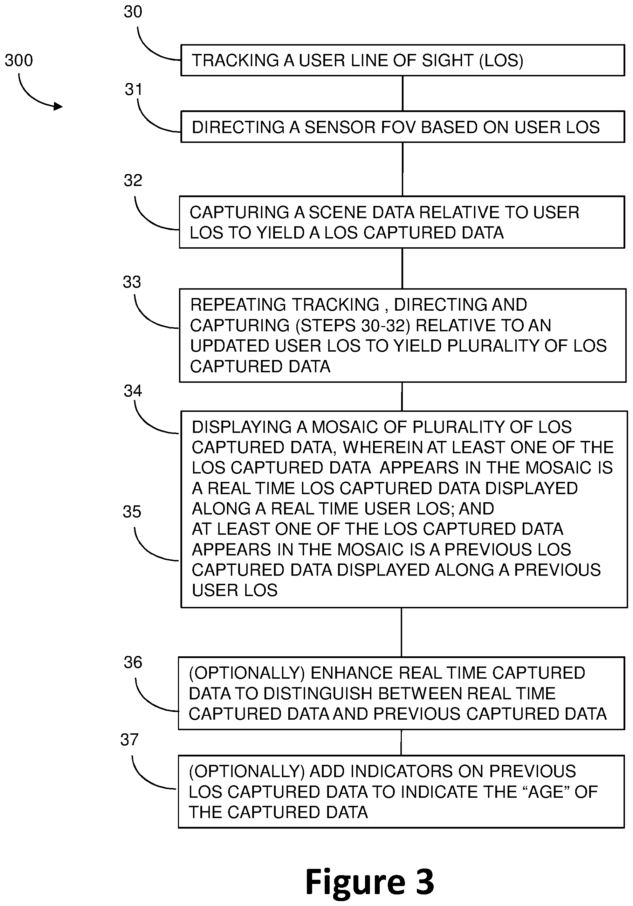

The invention as claimed provides a system for displaying a sensor data on a display as defined in claim 1, and a method of displaying a sensor data on a display as defined in claim 12. The invention as claimed is best understood in light of the embodiment described in the context of Figure 3. Other embodiments described herein do not necessarily describe the complete combination of features as claimed, but are useful for understanding the invention as claimed.

Some embodiments of the present invention provide a system and method for displaying a sensor data on a display. The system may include: a tracker arrangement to track line of sight (LOS) of a user; a sensor configured to be directed based on said LOS and configured to capture data of a scene relative to said LOS, to yield LOS captured data; and a display configured to: receive said LOS captured data, and display the LOS captured data relative to said LOS, wherein said display field of view (FOV) is wider than the sensor FOV and wherein the display is configured to display a mosaic of plurality of said LOS captured data, wherein at least one of the LOS captured data appears in said mosaic is a real time LOS captured data displayed at a real time LOS, and wherein at least one of the LOS captured data appears in said mosaic is a previous LOS captured data displayed at a previous LOS.

### BRIEF DESCRIPTION OF THE DRAWINGS

For a better understanding of the invention and in order to show how it may be implemented, references are made, purely by way of example, to the accompanying drawings in which like numerals designate corresponding elements or sections. In the accompanying drawings:
**Figure 1** is high level schematic illustrations of use scenarios, according to some embodiments of the invention;
**Figures 2A** and **2B** are diagrams showing practical use cases of a display according to some embodiments of the invention;
**Figure 3** is high level block diagram, according to some embodiments of the invention;
**Figure 4A** and **4B** are high-level block diagrams illustrations of system embodiments, according to some embodiments of the invention;
**Figure 5** is another high-level block diagram illustration of system embodiment, according to some embodiments of the invention;
**Figure 6A and 6B** is yet another high-level block illustration of a system, according to some embodiments of the invention; and
**Figure 7** is a diagram illustrating a scanning embodiment according to another aspect of the invention.

### DETAILED DESCRIPTION OF THE INVENTION

Embodiments disclosed herein relate to devices, systems and methods for displaying information to a user and which may be configured to display synthetic data and at least one sensor data with relation to a desired point indicated by a head mounted see through display line of sight relative to an outside scene the monitoring and/or controlling of the display using the line of sight improves situation awareness and/or better capabilities to control different area of the display.

The following description of the display devices, systems and methods is given with reference to particular examples, with the understanding that such devices, systems and methods are not limited to these examples.

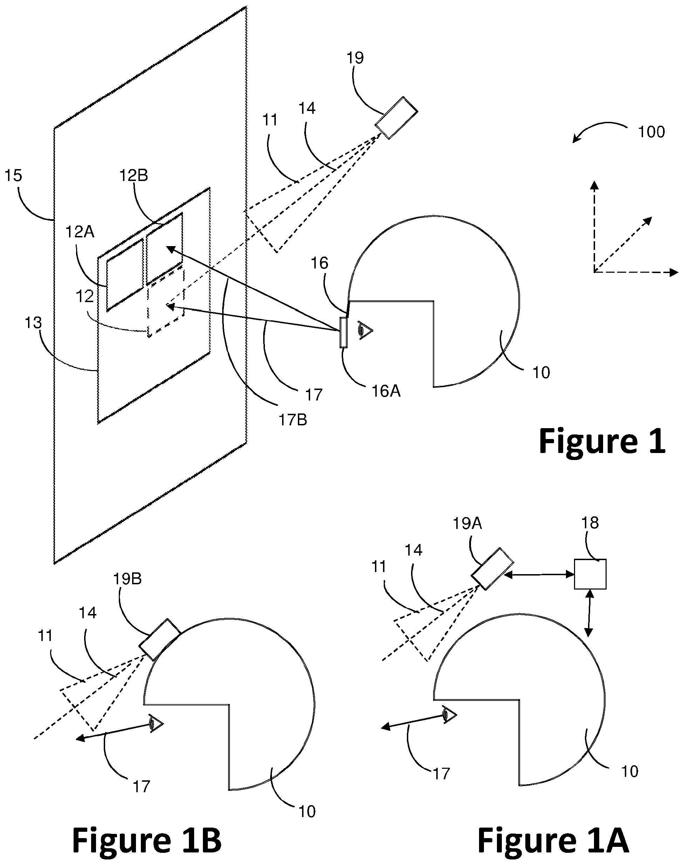

Reference is now made to **Figure 1** which is a schematic illustration of an exemplary scenario, generally referenced **100,** in accordance with an embodiment of the disclosed technique. Exemplary scenario **100** exemplifies a head mounted device (HMD) configured to display at least one sensor data relative to the user head tracked line of sight. In exemplary scenario **100,** an HMD **16** is mounted on a user head **10,** The HMD **16** may be coupled to a display **16A.** A tracker arrangement (not shown) is configured to track a user line of sight (LOS) **17** relative to a coordinate system. A sensor **19** having a field of view **11** is directed to capture data of scene **15** relative to user head LOS **17.** The sensor direction (i.e. the center of sensor field of view) is indicated by dotted line **14,** the sensor field of view (FOV) **11** follows the sensor direction to capture at least part of scene data **15** creating a LOS captured data **12.** In some embodiments display **16A** field of view **13** is wider than the sensor FOV **11,** therefore the data captured by the sensor (LOS captured data **12**) is covering only a part of HMD display **16A** field of view **13.** HMD **16** may receive sensor captured data associated with user LOS 17 and is further configured to display a mosaic of sensor captured data **12,12A,12B** relative to user LOS **17.** The displayed mosaic may contain plurality of sensor captured data **12,12A,12B** (and more) where at least one of the LOS captured data displayed in the mosaic is a real time LOS captured data **12** displayed along a real time user LOS **17** and at least one of the other LOS captured data appears in the mosaic is a previous LOS captured data **12A** or **12B** displayed in connection with the previous related user LOS.

According to some embodiments of the present invention, display **16A** may be configured to display the mosaic in a manner that allows a viewer (user) to distinguish between the real time LOS captured data and the previous LOS captured data. This may be achieved in many ways as outlined hereinafter.

For example, previous LOS captured data **12A** may be displayed at the actual spatial position in scene **15** as captured by sensor and as indicated by the user LOS **17** at the time of capturing the scene data. A real time LOS captured data **12** is the last and most recent data captured by the sensor **19** displayed relative to the user real time LOS and may be updated continuously based on updated user LOS **17** and updated LOS captured data **12.** The previous LOS captured data **12A** and **12B** are scene captured data that were taken along a previous user LOS and associated with the user LOS in the same coordinate system. The association of the LOS captured data with the position and orientation of the user head **10** (LOS **17**) may allow to project the LOS captured data in the exact spatial position on the scene in real time and such that they may be displayed relative to the previous LOS they were captured in . The previous LOS captured data is the sensor captured data in a previous time (in the past). The mosaic of sensor captured data **12,12A,12B** is displayed on display **16A** to cover a field of view wider than a single sensor FOV 11 where the mosaic may contain a fusion of sensor real time LOS captured data **12** displayed along a real time user LOS **17** and at least one previous LOS captured data **12A, 12B** displayed along a previous LOS . The position and orientation of a previous LOS captured data **12B** on said HMD display FOV **13** may be calculated as the relative position and orientation between real time LOS **17** and previous LOS **17B.**

In this embodiment, HMD **16** and user head **10** were directed towards scene **15** in accordance with LOS **17B** at time T-1 (a previous time) at that moment sensor **19** captured sensor pervious LOS captured data **12B** associated with user LOS **17B.** From time T-1 to T0 (real time) HMD **16** and user head **10** moved to real time LOS **17** and at that moment sensor **19** may capture sensor real time LOS captured data **12** , the mosaic displayed to the user on HMD display **16A** may show sensor previous LOS captured data **12B** and sensor real time LOS captured data **12** where each one is displayed in its own relative LOS. The mosaics **12,12A,12B** allow to increase the FOV of a narrow FOV sensor **19** such that the user may see a wider sensor **19** FOV which may include real time LOS captured data **12** and previous LOS captured data **12A** and **12B** on display **16A.** Each of the sensor captured data may contain the LOS at which the captured data was taken and a time tag. The time tag may indicate the relative age (new data vs. old data) of each of the sensor captured data **12,12A,12B**. As an example captured data **12** is a real time captured data captured in time **Td** (display time) associated with user LOS **17** where **12A** is previous captured data captured in **T-1** associated with user LOS **17A** (not shown) and **12B** is previous captured data captured in **T-2** associated with user LOS **17B** . Storing and delivering the captured data alongside the LOS data and the time tag may allow to implement different display techniques such that a mosaic may be generated displaying a sensor captured data in accordance with its corresponding LOS and its time tag. Further scenarios and capabilities of using the stored LOS captured data alongside the time tags and the LOS data will be explained in the following figures.

The displayed mosaic may contain plurality of sensor LOS captured data **12,12A,12B** where real time LOS captured data **12** along real time LOS **17** may be enhanced using at least one or combination of: a contour around captured data FOV , increased brightness , augmented data only inside real time data (FOV **12**) , a symbol or other indication allowing the user to clearly distinguish which of the sensor captured data FOV displayed in the mosaic is the most current real time captured data. The displayed mosaic may contain plurality of sensor LOS captured data **12,12A,12B** where previous time LOS captured data **12B** along previous LOS **17B** may be indicated such that a user may distinguish the previous data from the real time LOS captured data , the previous LOS captured data may be indicated using: a dedicated symbol , a clock or counter indicating the time the previous captured data was taken , a bar changing size or color to indicate the age of the data , fading and/or reduced intensity of the captured data corresponding to the age of the data (relative time between the time tag and real time) . As illustrated in figure **1B** Sensor **19** may be rigidly coupled to the user HMD and may move together as the HMD moves. Sensor **19** may be remotely coupled to the user LOS figure **1A** such that user LOS changes may be communicated via controller **18** and adapt to shift the sensor LOS **14** by using gimbals, scanning mirror (DMD or other digital mirror array) or other means available to shift the sensor FOV to any direction in a relation to user LOS **17** movements.

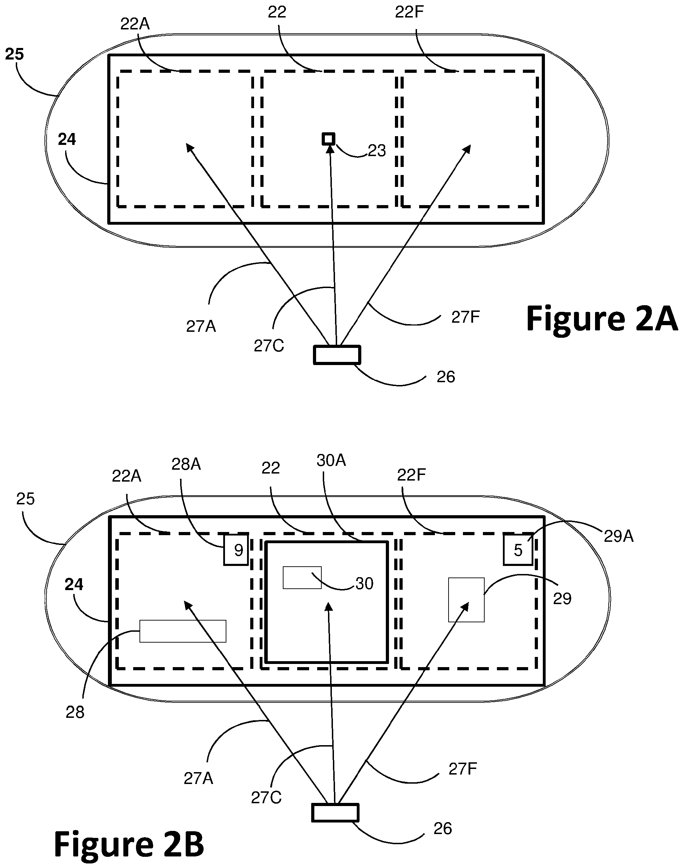

Reference is now made to **Figures 2A** and **2B****,** which are schematic illustrations of an exemplary scenario in accordance with an embodiment of the disclosed technique. **Figure 2A** illustrates a display **25** with a field of view **24** which may be adapted for displaying plurality of sensor LOS captured data **22, 22A, 22F,** the display FOV **24** is greater than the sensor LOS captured data FOV **22.** Sensor previous LOS captured data **22A** indicates a sensor data captured at previous user LOS **27A,** sensor Previous LOS captured data **22F** may indicate a sensor data captured at previous user LOS **27F** and LOS captured data **22** indicates a real time LOS captured data at real time LOS **27C** (real time LOS indicates the current user LOS). In this illustration user LOS may view the scene in a LOS direction **27C** at time **Td** (display time) which is the real time and may further allow to view the scene in LOS **27C** display **25** is displaying real time LOS captured data **22** and at the same time projects previous LOS captured data **22A** and **22F.**

Figure **2B** illustrates an exemplary scenario in accordance with one embodiment of the invention. In this embodiment display **25** is displaying plurality of sensor LOS captured data **22,22A,22F** where LOS captured data **22** is the only real time data, the other LOS captured data **22A,22F** are from a previous user LOS. In figure **2B** display **25** with a field of view **24** may be adapted for displaying plurality of sensor LOS captured data **22,22A,22F,** the display FOV **24** is greater than the sensor LOS captured data FOV **22.** Sensor previous LOS captured data **22A** is accompanied with different indicators may allow the user to realize that the sensor data was captured at previous user LOS **27A** at **Td-9** (9 sec before real time **Td**) as indicated on the display as indicator **28A** ,where **T-9** may indicate that the previous LOS captured data **22A** was captured 9 seconds previous to the real time data **22** currently displayed at real time LOS **27C,** it is clear that the time scale may be selected from but not limited to: milliseconds, seconds, minutes or any other time scale which may be configured automatically or selected according to a user definitions. The indicators should provide a visible indication regarding the "age" (the time that passed from the last visit of the sensor FOV) of the LOS captured data **22,22A,22F** where different type of indicators may exist such as: sand clock/hourglass (not shown) , digital counter **28A,** brightness level of captured data or objects in the captured data FOV such as object **28**,different contour types such as contour **30A** which may indicate the real time LOS captured data.

Sensor Previous LOS captured data **22F** with different indicators displayed allows to indicate that the sensor data was captured at previous user LOS **27F** at **Td-5** (5 sec before real time **Td**) as indicated on the display as indicator **29A** where **T-5** may indicate that the previous LOS captured data **22F** was captured 5 seconds previous to the real time data **22** currently displayed at real time LOS **27C** . LOS captured data **22** indicates a real time LOS captured data at real time LOS **27C** (real time LOS indicates the current user LOS). In this illustration the user may view the scene on display **25** with plurality of indicators which may allow to understand the "age" of the captured data located in different spatial location in the scene. The real time LOS captured data **22** displayed alongside previous LOS captured data **22A, 22F** comprising indicators **28,28A,29,29A,30,30A** the indicators provide information regarding the time passed from the current /real time to the last time the sensor was traveling over that spatial location in the scene of previous LOS captured data **22A,22F.**

**Figure 3** is a schematic illustration of a method for displaying sensor data in accordance to one aspect of the invention. Method **300** starts with step **30** by tracking a user LOS this may be done by a tracker arrangement mounted on the HMD (head mounted display) or by a tracker situated remotely to the HMD. The tracker arrangement may be an optical tracker, inertial tracker, magnetic tracker or a hybrid tracker combining different types of tracker capabilities. The tracker arrangement is capable of calculating the position and orientation of the user head and the HMD in a coordinate system, the coordinate system may have an origin at the HMD, a fix location in the scene or attached to a moving platform. The tracker arrangement is tracking the user LOS in a scene in case the sensor is remotely situated from the user head the tracker may send the LOS to the sensor (or a controller) and by doing so allowing to direct the sensor FOV based on the user LOS such that the designation point of the user LOS on the scene is constantly tracked by the sensor FOV (step **31**)**.** In different cases where the HMD and the sensor are rigidly coupled the sensor FOV is constantly moving (bore sighted) according to the user head and HMD , in both cases the LOS captured data contains the scene data (image , video) and an position and orientation at the time the LOS captured data was taken.

In step **32** the sensor is capturing a scene data relative to user LOS to yield a LOS captured data, the LOS captured data may be coupled with additional data at the time of capturing such as :a time tag, position and orientation, user related data , head rates , vibrations of the sensor , scene conditions (weather conditions, ambient light ). The additional data coupled to the LOS captured data may allow to render and display the LOS captured data on the display in way that the image of the LOS captured data is placed and stabilized in the spatial location in the scene at the moment of capturing. The LOS captured data may be stabilized to the designation point of the capturing and maintain its spatial location even when the user head is moving. While the user head is moving the tracking, directing and capturing is repeated and a sequence/plurality of LOS captured data is created each with its own LOS data and time tag. The plurality of LOS captured data reflects a trail of frames captured in accordance with the user head and the last LOS captured data is the current/real time LOS captured data (real time indicates the last updated information regarding the sensor LOS , this update frequency and latency may vary in different system configurations) capturing a real time LOS captured data as seen by the sensor at the current/real time user LOS. While creating the plurality of LOS captured data (previous LOS captured data and real time LOS captured data) the method in step **34** may be configured to display a mosaic of plurality of LOS captured data, wherein at least one of the LOS captured data appears in the mosaic is a real time LOS captured data displayed along a real time user LOS and at least one of the LOS captured data appears in the mosaic is a previous LOS captured data displayed along a previous user LOS. Displaying a mosaic of a previous LOS captured data combined with a real time LOS captured data may allow to increase a narrow FOV sensor to cover a wider FOV on a display. Increasing the overall situation awareness of the user is achieved by increasing the sensor coverage area on the display and adding an indication allowing to distinguish between the plurality of LOS captured data indicating whether the LOS captured data is a real time LOS captured data or a previous LOS captured data and further placement of other indicators on the display to allow the user to quickly realize the "age" step **37** (the time that passed from capturing to current time) of each of the LOS captured data within the mosaic. Enhancing the real time LOS captured data in step **36** may be done by increasing the display intensity or by highlighting a contour surrounding the real time LOS captured data.

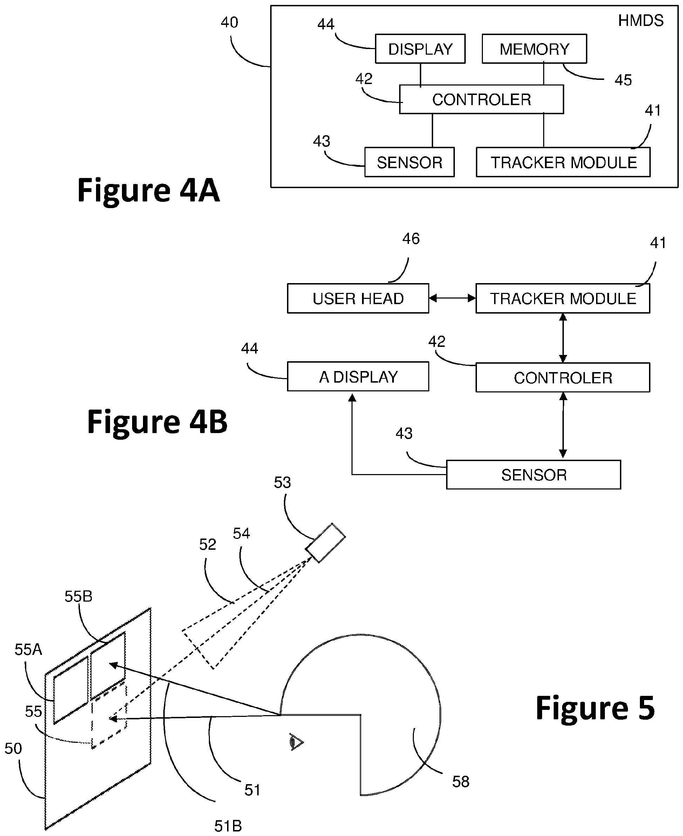

**Figure 4A, 4B** are a high-level system schematic illustration detailing different system configurations changes according to different system demands. Figure **4A** illustrates one embodiment of the invention where HMDS **40** (head mounted device system) comprises a near eye display coupled to the HMD and may allow to view the LOS captured data mosaic in front of the user eye according to the tracked user LOS and the spatial location of the LOS captured data mosaic. In this embodiment the tracker module **41,** sensor **43,** controller **42,** display **44** and memory **45** are coupled to the HMD and may be a part of one system which comprises all elements on the mounted device.

**Figure 4B** illustrates yet another embodiment of the invention where in this case the display is not connected to the HMD but rather may be remotely located either stationary (glass cockpit, training arena) or mobile display (mobile device). In case of glass cockpit where all the cockpit may serve as a display, using the user head LOS may direct the sensor FOV such that it may capture the FOV based on the user LOS. The mosaic generated based on the user LOS and the sensor FOV may be placed on the glass cockpit according to the sensor LOS captured data spatial position. In this scenario the user head may be tracked in the coordinate system (earth coordinate system or platform coordinate system) and according to the intersection of the user LOS and the remote display the sensor FOV may be displayed in the correct spatial location on the scene.

**Figure 5** illustrates together with figure **4B** a scenario where the display is situated in a remote location. User head **58** is tracked by a tracking module and the user LOS **51** may be calculated in a defined coordinated system , the user may view screen **50** situated in front of him and sensor **53** may be directed according to the user LOS **51** to capture LOS captured data **55,55A,55B** . A mosaic containing the LOS captured data **55-55B** may be displayed on screen **50** in accordance with the conformal spatial position on the scene. The screen **50** may be a see through screen allowing to see the real world behind it and to display captured data **55** as an overlay on the scene or it may be a non-see through display which only allow to display the sensor data **55** in its spatial position on the real world behind the scene (the intersection of the sensor FOV line of sight **54** and the real scene). Display **50** may change its transparency level from a non-see through level to a full see through level.

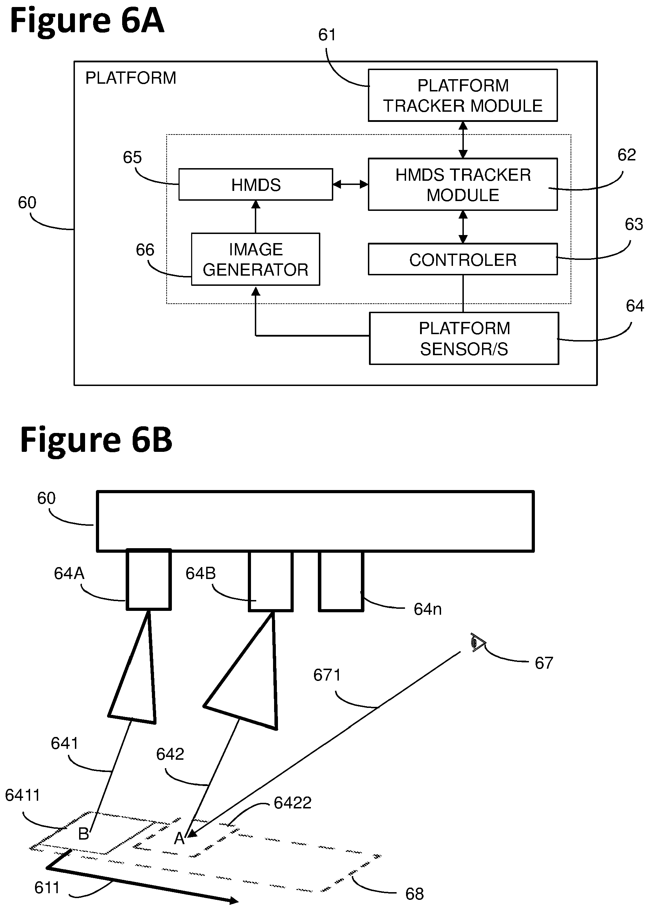

**Figure 6A** illustrates another embodiment of the invention where a system and method according to the invention may be installed on a moving platform and additional sensors of the platform may enhance the system capabilities to cover additional scene area using different types of sensors. Platform 60 may carry different types of sensors such as platform sensors 64 which may include different types of sensors configured to detect in different spectrum such as: visible, NIR, SWIR, LWIR and the like. The sensors may have different configurations and may have different capabilities such as: FOV (field of view) narrow or wide, depth of field, range of detection, depth mapping capabilities and other. The sensors may be directed at a specific LOS (line of sight) using gimbals or other means which may allow to direct the sensor FOV LOS. The sensors LOS may be configured to track the user head or HMDS LOS (bore sighted) such that the sensor FOV is directed to the LOS of the user or the HMDS accordingly. Platform **60** may have a tracker module which is capable of tracking the platform position and orientation in earth coordinate system or in any other coordinate system which may be defined as reference coordinate system. The HMDS **65** may have an independent tracking system which may allow to track the HMD in the platform coordinate system or in earth coordinate system. The HMDS position and orientation may be calculated relative to the platform position and orientation and may use to direct the sensors FOV LOS in accordance with the user HMDS LOS. The platform sensors **64** may be directed to the HMDS LOS and may capture the scene by tracking the HMDS LOS swiping the scenery. Using the sensors to capture different area of the scene as the HMDS moves allows to use the sensors narrow FOV to cover a wide area and to create a mosaic of LOS captured data. The mosaic generated by the FOV captured comprises plurality of LOS captured date from a previous LOS (in the past) and at least one real time LOS captured data. In Figure **6B** one use of such a system is demonstrated. Platform **60** comprises plurality of sensors **64A** to **64N** each of the sensors is capable of redirecting its LOS according to the systems demand. User LOS **671** is directed to the scene and designates point A on the surface, sensor **64B** is directing its LOS **642** to cover the real time HMDS LOS **671** and intersection point A to yield a real time LOS captured data **6422.** The real time LOS captured data covers only a small area of the scene **68,** in order to create a better situation awareness for the user a wider area of the scene is captured using sensor **64A** in a predefined scanning pattern which in this case creates a corridor around HMDS LOS **671** by capturing along path **611** the area surrounding the HMDS real time LOS, in this way the user may view a mosaic containing real time data in his actual LOS and other parts of the scene by previous captured data **6411** capturing along path **611.**

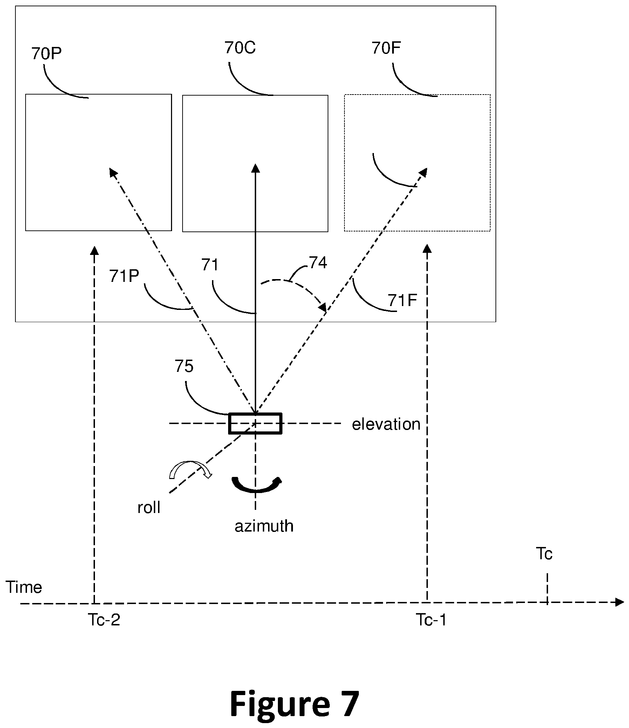

**Figure 7** illustrates another embodiment of the invention which illustrates a scanning scenario which allows to predict a future HMD LOS and to capture previous LOS captured data surrounding that future HMD LOS. At time **Tc-2** (previous time) HMD **75** LOS is directed towards LOS **71P** and displaying sensor LOS captured data **70P,** HMD **75** starts to rotate from LOS **71P** to the right around the azimuth axis. HMD LOS starts to stabilize around LOS **71** at time **Tc** and a real time LOS captured data **70C** is displayed around LOS **71** to the user on the HMD, Just before stabilizing around LOS **71** sensor FOV is directed towards LOS **71F** at time **Tc-1** in order to capture a future sensor FOV **70F** this rapid shift of the sensor FOV is not detectable by the user and allows to increase further the sensor FOV on the display in a manner that not only the trail of sensor FOV is captured but also an "overshoot" sensor FOV is captured. The rapid shift of the sensor FOV may be achieved by different actuators such as DMD (digital mirror array), scanning mirror and others.

It should be noted that method according to embodiments of the present invention may be stored as instructions in a computer readable medium to cause processors, such as central processing units (CPU) to perform the method. Additionally, the method described in the present disclosure can be stored as instructions in a non-transitory computer readable medium, such as storage devices which may include hard disk drives, solid state drives, flash memories, and the like. Additionally, non-transitory computer readable medium can be memory units.

In order to implement the method according to embodiments of the present invention, a computer processor may receive instructions and data from a read-only memory or a random-access memory or both. At least one of aforementioned steps is performed by at least one processor associated with a computer. The essential elements of a computer are a processor for executing instructions and one or more memories for storing instructions and data. Generally, a computer will also include, or be operatively coupled to communicate with, one or more mass storage devices for storing data files. Storage modules suitable for tangibly embodying computer program instructions and data include all forms of non-volatile memory, including by way of example semiconductor memory devices, such as EPROM, EEPROM, and flash memory devices and also magneto-optic storage devices.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object-oriented programming language such as Java, Smalltalk, JavaScript Object Notation (JSON), C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described above with reference to flowchart illustrations and/or portion diagrams of methods, apparatus (systems) and computer program products according to embodiments of the invention. It will be understood that each portion of the flowchart illustrations and/or portion diagrams, and combinations of portions in the flowchart illustrations and/or portion diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or portion diagram portion or portions.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or portion diagram portion or portions.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or portion diagram portion or portions.

The aforementioned flowchart and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved. It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

In the above description, an embodiment is an example or implementation of the inventions. The various appearances of "one embodiment," "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions.

It is to be understood that the phraseology and terminology employed herein is not to be construed as limiting and are for descriptive purpose only.

The principles and uses of the teachings of the present invention may be better understood with reference to the accompanying description, figures and examples.

It is to be understood that the details set forth herein do not construe a limitation to an application of the invention.

Furthermore, it is to be understood that the invention can be carried out or practiced in various ways and that the invention can be implemented in embodiments other than the ones outlined in the description above.

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional elements.

It is to be understood that where the claims or specification refer to "a" or "an" element, such reference is not be construed that there is only one of that elements.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The descriptions, examples, methods and materials presented in the claims and the specification are not to be construed as limiting but rather as illustrative only.

Meanings of technical and scientific terms used herein are to be commonly understood as by one of ordinary skill in the art to which the invention belongs, unless otherwise defined.

The present invention may be implemented in the testing or practice with methods and materials equivalent or similar to those described herein.

While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims.

## Claims

1. A system for displaying a sensor data on a display, the system comprising:
a tracker arrangement to track a line of sight, LOS, (17) of a user;
a single sensor (19) configured to be directed based on said LOS and configured to capture data of a scene (15) relative to said LOS, to yield LOS captured data (12); and
a display (16A) configured to: receive said LOS captured data, and display the LOS captured data relative to said LOS,
wherein a field of view, FOV, (13) of said display is wider than a FOV (11) of said sensor, the system being **characterised in that**
the display is configured to display a mosaic of plurality of said LOS captured data (12, 12A, 12B), wherein said plurality of said LOS captured data are captured by said single sensor,
wherein at least one of the LOS captured data that appears in said mosaic is a real time LOS captured data (12) displayed at a real time LOS,
wherein at least one of the LOS captured data that appears in said mosaic is a previous LOS captured data (12A, 12B) displayed at a previous LOS, and
wherein the display is further configured to display said mosaic in a manner that allows a user to distinguish (28A, 29A, 30A) between said real time LOS captured data and said previous LOS captured data.

2. The system according to claim 1, wherein said real time LOS captured data displayed at a current LOS of said user is enhanced relative to said previous LOS captured data.

3. The system according to claim 2, wherein said real time LOS captured data displayed at the user current LOS is enhanced using at least one of: display contour around captured data, increased brightness, indicators, symbols.

4. The system according to claim 1, wherein said LOS captured data contains a time tag and orientation data indicating the time and orientation of said LOS captured data.

5. The system according to claim 1, wherein said previous LOS captured data is displayed with fading or with reduced intensity corresponding to an age of the data.

6. The system according to claim 4 and 5, wherein previous LOS captured data is fading relative to the said time tag and therefore indicating the aging of the captured data displayed.

7. The system according to claim 1, wherein said display is part of a head mounted display, HMD, rigidly coupled to said sensor.

8. The system according to claim 1, wherein said display is stationary and remotely situated from the user head.

9. The system according to claim 1, wherein said display is a see-through display mounted on a vehicle and allows to see the scene outside the vehicle.

10. The system according to claim 1, wherein said display is adjusted to change its transparency.

11. The system according to claim 10, wherein said transparency is changing according to the LOS captured data intensity and/or visibility.

12. A method of displaying a sensor data on a display, the method comprising:
tracking (30) a user line of sight (LOS);
directing (31) a sensor FOV of a single sensor, based on said user LOS; capturing (32), using said single sensor, a scene data relative to said user LOS to yield a LOS captured data;
repeating (33) tracking, directing and capturing relative to an updated user LOS to yield plurality of LOS captured data;
the method being **characterised in that** it further comprises :
displaying (34) a mosaic of plurality of said LOS captured data, wherein said plurality of said LOS captured data are captured by said single sensor, wherein at least one of the LOS captured data that appears in said mosaic is a real time LOS captured data displayed along a real time user LOS,
wherein at least one of the LOS captured data that appears in said mosaic is a previous LOS captured data displayed along a previous user LOS, and
wherein the display is further configured to display (36; 37) said mosaic in a manner that allows a user to distinguish between said real time LOS captured data and said previous LOS captured data.

13. The method according to claim 12, wherein said real time LOS captured data is enhanced relative to said previous LOS captured data in said mosaic.

14. The method according to claim 13, wherein said real time LOS captured data displayed at the user current LOS is enhanced using at least one of: display contour around captured data, increased brightness, indicators or symbols.

15. The method according to claim 12, wherein said LOS captured data contains a time tag and orientation data indicating the time and orientation of said LOS captured data.

## Patentansprüche

1. System zum Anzeigen von Sensordaten auf einem Display, wobei das System wie folgt umfasst:
eine Tracker-Anordnung zum Nachverfolgen einer Sichtlinie (*line of sight,* LOS) eines Benutzers;
einen einzelnen Sensor (19), der dazu konfiguriert ist, basierend auf der Sichtlinie dirigiert zu werden und dazu konfiguriert ist, Daten einer Szene (15) mit Bezug auf die Sichtlinie zu erfassen, um aufgrund der Sichtlinie erfasste Daten (12) zu erhalten;
und
ein Display (16A), das zum Empfangen der aufgrund der Sichtlinie erfassten Daten und zum Anzeigen der aufgrund der Sichtlinie erfassten Daten mit Bezug auf die Sichtlinie konfiguriert ist,
wobei ein Blickfeld *(field of view,* FOV) (13) des Displays weiter ist als ein Blickfeld (11) des Sensors, wobei das System
**dadurch gekennzeichnet ist, dass** das Display dazu konfiguriert ist, ein Mosaik einer Vielzahl der aufgrund der Sichtlinie erfassten Daten (12, 12A, 12B) anzuzeigen,
wobei die Vielzahl der aufgrund der Sichtlinie erfassten Daten durch den einzelnen Sensor erfasst werden,
wobei mindestens eine Einheit der aufgrund der Sichtline erfassten Daten, die in dem Mosaik erscheint, aufgrund der Sichtlinie erfasste Daten in Echtzeit sind, die in einer Sichtlinie in Echtzeit angezeigt werden,
wobei mindestens eine Einheit der aufgrund der Sichtlinie erfassten Daten, die in dem Mosaik erscheint, eine vorherige aufgrund der Sichtlinie erfasste Dateneinheit (12A, 12B) ist, die in einer vorherigen Sichtlinie angezeigt wurde, und
wobei das Display ferner dazu konfiguriert ist, das Mosaik auf eine Weise anzuzeigen, die es dem Benutzer ermöglicht, zwischen in Echtzeit aufgrund der Sichtlinie erfassten Daten und den vorherigen aufgrund der Sichtlinie erfassten Daten zu unterscheiden (28A, 29A, 30A).

2. System nach Anspruch 1, wobei die aufgrund der LOS in Echtzeit erfassten Daten, die in einer aktuellen Sichtlinie des Benutzers angezeigt werden, mit Bezug auf die vorherigen aufgrund der LOS erfassten Daten optimiert sind.

3. System nach Anspruch 2, wobei die in Echtzeit aufgrund der LOS erfassten Daten, die auf der aktuellen Sichtlinie des Benutzers angezeigt werden, durch Verwenden mindestens eines hiervon optimiert werden: einer Display-Kontur um die erfassten Daten herum, eine erhöhte Helligkeit, Indikatoren, Symbole.

4. System nach Anspruch 1, wobei die aufgrund der LOS erfassten Daten eine Zeitmarkierung und Orientierungsdaten enthalten, die die Zeit und Orientierung der aufgrund der LOS erfassten Daten anzeigen.

5. System nach Anspruch 1, wobei die vorherigen aufgrund der LOS erfassten Daten mithilfe von Ausblenden oder einer reduzierten Intensität entsprechend einem jeweiligen Alter der Daten angezeigt werden.

6. System nach Anspruch 4 und Anspruch 5, wobei vorherige aufgrund der LOS erfasste Daten mit Bezug auf die Zeitmarkierung ausgeblendet werden und damit auf das Altern der erfassten Daten, die angezeigt werden, hinweisen.

7. System nach Anspruch 1, wobei das Display Teil eines am Kopf befestigten Displays *(head mounted display,* HMD) ist, welches starr mit dem Sensor gekoppelt ist.

8. System nach Anspruch 1, wobei das Display ortsfest und entfernt von Kopf des Benutzers angeordnet ist.

9. System nach Anspruch 1, wobei das Display ein durchsichtiges Display ist, das auf einem Fahrzeug befestigt ist und es ermöglicht, die Szene außerhalb des Fahrzeuges zu sehen.

10. System nach Anspruch 1, wobei das Display angepasst wird, um die Lichtdurchlässigkeit desselben zu ändern.

11. System nach Anspruch 10, wobei die Lichtdurchlässigkeit gemäß den aufgrund der LOS erfassten Daten und/oder der Sichtweite veränderlich ist.

12. Verfahren zum Anzeigen von Sensordaten auf einem Display, wobei das Verfahren wie folgt umfasst:
Nachverfolgen (30) einer Sichtlinie (LOS) eines Benutzers;
Dirigieren (31) eines Blickfeldes (FOV) eines Sensors jeweils basierend auf der Sichtlinie des Benutzers;
Erfassen (32), wobei der einzelne Sensor verwendet wird, von Daten einer Szene mit Bezug auf die Sichtlinie des Benutzers, um Daten zu erhalten, die aufgrund der Sichtlinie erfasst werden;
Wiederholen (33) von Nachverfolgen, Anweisen und Erfassen mit Bezug auf eine aktualisierte Sichtlinie, um eine Vielzahl von Daten zu erhalten, die aufgrund der Sichtlinie erfasst wurden; wobei das Verfahren **dadurch gekennzeichnet ist, dass** es ferner wie folgt umfasst:
Anzeigen (34) eines Mosaiks einer Vielzahl der Daten, die aufgrund der Sichtlinie erfasst werden, wobei die Vielzahl der Daten, die aufgrund der Sichtlinie erfasst werden, durch den einzelnen Sensor erfasst werden, wobei mindestens eine Dateneinheit der Daten, die aufgrund der Sichtlinie erfasst werden, die in dem Mosaik erscheint, aufgrund von Daten, die aufgrund der Sichtlinie erfasst werden, eine Dateneinheit in Echtzeit ist und zusammen mit einer Sichtlinie eines Benutzers in Echtzeit angezeigt wird,
wobei mindestens eine Dateneinheit, der aufgrund der Sichtlinie erfassten Dateneinheiten, die in dem Mosaik erscheint, eine vorherige Dateneinheit ist, die aufgrund von Daten, die aufgrund der Sichtlinie erfasst werden, zusammen mit einer vorherigen Sichtlinie eines Benutzer angezeigt werden, und
wobei das Display ferner dazu konfiguriert ist, das Mosaik auf eine Weise anzuzeigen (36; 37), die es dem Benutzer ermöglicht, zwischen Daten, die aufgrund einer Sichtlinie in Echtzeit erfasst werden, und den Daten, die aufgrund einer vorherigen Sichtlinie erfasst werden, zu unterscheiden.

13. Verfahren nach Anspruch 12, wobei die Daten, die aufgrund der LOS in Echtzeit erfasst werden, mit Bezug auf die Daten, die aufgrund einer vorherigen LOS erfasst werden, in dem Mosaik optimiert sind.

14. Verfahren nach Anspruch 13, wobei die Daten, die aufgrund der LOS in Echtzeit erfasst wurden, die in der aktuellen LOS des Benutzers angezeigt werden, durch Verwenden mindestens eines hiervon optimiert werden: einer Display-Kontur, einer erhöhten Helligkeit, Indikatoren oder Symbolen.

15. Verfahren nach Anspruch 12, wobei die aufgrund der LOS erfassten Daten eine Zeitmarkierung und Orientierungsdaten enthalten, welche die Zeit und Orientierung der aufgrund der LOS erfassten Daten anzeigen.

## Revendications

1. Système pour afficher des données de capteur sur un écran, le système comprenant :
un agencement de suivi pour suivre une ligne de visée (LOS) (17) d'un utilisateur ;
un capteur unique (19) configuré pour être dirigé en fonction de ladite LOS et configuré pour capturer les données d'une scène par rapport à ladite LOS, afin de produire des données capturées par rapport à la LOS (12) ; et
un écran (16A) configuré pour : recevoir lesdites données capturées par rapport à la LOS, et afficher les données capturées par rapport à ladite LOS,
dans lequel un champ de vision (FOV) (13) dudit écran est plus large qu'un FOV (11) dudit capteur,
le système étant **caractérisé en ce que** l'écran est configuré pour afficher une mosaïque d'une pluralité desdites données capturées par rapport à la LOS (12, 12A, 12B),
dans lequel ladite pluralité desdites données capturées par rapport à la LOS est capturée par ledit capteur unique,
au moins l'une des données capturées par rapport à la LOS qui apparaît dans ladite mosaïque étant une donnée capturée par rapport à la LOS en temps réel (12A, 12B) affichée dans une LOS précédente, et
dans lequel l'écran est en outre configuré pour afficher ladite mosaïque d'une manière qui permet à un utilisateur de faire la distinction (28A, 29A, 30A) entre lesdites données capturées par rapport à la LOS en temps réel et lesdites données capturées par rapport à des LOS précédentes.

2. Système selon la revendication 1, dans lequel lesdites données capturées en temps réel par rapport à la LOS, affichées lors d'une LOS actuelle dudit utilisateur, sont améliorées par rapport auxdites données capturées par rapport à des LOS précédentes.

3. Système selon la revendication 2, dans lequel lesdites données capturées en temps réel par rapport à la LOS, affichées lors d'une LOS actuelle de l'utilisateur, sont améliorées à l'aide d'au moins l'un des éléments suivants : contour d'affichage autour des données capturées, luminosité accrue, indicateurs, symboles.

4. Système selon la revendication 1, dans lequel lesdites données capturées par rapport à la LOS contiennent une étiquette temporelle et des données d'orientation indiquant l'heure et l'orientation desdites données capturées par rapport à la LOS.

5. Système selon la revendication 1, dans lequel lesdites données capturées par rapport à des LOS précédentes sont affichées avec un flou ou avec une intensité réduite correspondant à l'âge des données.

6. Système selon les revendications 4 et 5, dans lequel les données capturées par rapport à des LOS précédentes s'estompent par rapport à ladite étiquette temporelle et indiquent donc le vieillissement des données capturées affichées.

7. Système selon la revendication 1, dans lequel ledit écran fait partie d'un visiocasque (HMD), rigidement couplé audit capteur.

8. Système selon la revendication 1, dans lequel ledit écran est fixe et situé à distance de la tête de l'utilisateur.

9. Système selon la revendication 1, dans lequel ledit écran est un écran transparent monté sur un véhicule qui permet de voir la scène à l'extérieur du véhicule.

10. Système selon la revendication 1, dans lequel ledit écran s'ajuste pour changer sa transparence.

11. Système selon la revendication 10, dans lequel ladite transparence change en fonction de l'intensité et/ou de la visibilité des données capturées par rapport à la LOS.

12. Procédé d'affichage de données de capteur sur un écran, le procédé consistant à :
suivre (30) une ligne de visée (LOS) d'un utilisateur ;
diriger (31) le FOV d'un capteur unique en fonction de ladite LOS de l'utilisateur ;
capturer (32), à l'aide dudit capteur unique, des données de scène relatives à ladite LOS de l'utilisateur pour produire des données capturées par rapport à la LOS ;
répéter (33) le suivi, la direction et la capture par rapport à une LOS mise à jour de l'utilisateur pour produire une pluralité de données capturées par rapport à la LOS ;
le procédé étant **caractérisé en ce qu'**il comprend en outre :
l'affichage (34) d'une mosaïque d'une pluralité desdites données capturées par rapport à la LOS, ladite pluralité desdites données capturées par rapport à la LOS étant capturée par ledit capteur unique, au moins l'une des données capturées par rapport à la LOS, qui apparaît dans ladite mosaïque, étant une donnée capturée en temps réel par rapport à la LOS, affichée le long d'une LOS de l'utilisateur en temps réel,
au moins l'une des données capturées par rapport à la LOS qui apparaît dans ladite mosaïque étant une donnée capturée par une LOS précédente affichée le long d'une LOS précédente de l'utilisateur, et
l'écran étant en outre configuré pour afficher (36 ; 37) ladite mosaïque de manière à permettre à un utilisateur de faire la distinction entre lesdites données capturées par rapport à la LOS en temps réel et lesdites données capturées par rapport à des LOS précédentes.

13. Procédé selon la revendication 12, dans lequel lesdites données capturées par rapport à la LOS en temps réel sont améliorées par rapport auxdites données capturées par rapport à des LOS précédentes dans ladite mosaïque.

14. Procédé selon la revendication 13, dans lequel lesdites données capturées en temps réel par rapport à la LOS, affichées lors d'une LOS actuelle de l'utilisateur, sont améliorées en utilisant au moins l'un des éléments suivants : contour d'affichage autour des données capturées, luminosité accrue, indicateurs ou symboles.

15. Procédé selon la revendication 12, dans lequel lesdites données capturées par rapport à la LOS contiennent une étiquette temporelle et des données d'orientation indiquant l'heure et l'orientation desdites données capturées par rapport à la LOS.
